# EUROPÄISCHE PATENTANMELDUNG

(11) **EP 3 199 423 A2**
(43) Veröffentlichungstag der Anmeldung: **02.08.2017**
(21) Anmeldenummer: 17152570.2
(22) Anmeldetag: 23.01.2017
(51) Int. Cl.: B62D 1/06

(54) **VORRICHTUNG UND VERFAHREN ZUM AUFZIEHEN VON BEZÜGEN**

(30) Priorität: 28.01.2016 AT 500412016
(71) Anmelder: Pha, Socheat, 8073 Feldkirchen bei Graz (AT)
(72) Erfinder: Pha, Socheat, 8073 Feldkirchen bei Graz (AT)
(74) Vertreter: Puchberger & Partner Patentanwälte

(57) **Zusammenfassung**

Die Erfindung betrifft eine Vorrichtung und ein Verfahren zum automatisierten Aufziehen eines endlos vernähten Bezugsstreifens (1), vorzugsweise eines Lederstreifens, auf ein Bauteil, vorzugsweise ein Lenkrad (3), umfassend eine Schiebevorrichtung (2) mit einer Lenkradaufnahme zur Aufnahme des Lenkrads (3) sowie eine ortsfeste Basisplatte (4), wobei die Basisplatte (4) einen Konturausschnitt zum Durchdrücken des Lenkrads (3) aufweist, an dem Fixlamellen (6) und federnde Führungslamellen (7, 8) vorgesehen sind, wobei an der Basisplatte (4) Haltezylinder mit Positionier- und Haltevorrichtungen, vorzugsweise Haltemagneten (9), zur Halterung des Bezugsstreifens (1) an den Fixlamellen (6) vorgesehen sind.

## Beschreibung

Die Erfindung betrifft eine Vorrichtung und ein Verfahren zum Aufziehen von Bezügen auf Bauteile unterschiedlicher Außenkontur, insbesondere auf Lenkräder. Insbesondere betrifft die Erfindung eine Vorrichtung und ein Verfahren zur Herstellung von Lenkrädern mit einer schlauchförmigen Ummantelung aus verschiedensten, leicht elastischen Überzugsmaterialien, insbesondere aus Leder.

Den steigenden Ansprüchen an Präzision in der Verarbeitung, Anmut des Verbaus und Effizienz im Umgang mit Leder werden die bekannten chemischen und physikalischen Möglichkeiten der Lederherstellung nicht mehr gerecht. Aus Mangel an technischen Möglichkeiten der Lederindustrie werden zunehmend Kompromisse in der Verarbeitung in Verbindung mit einer sinkenden Effizienz eingegangen.

Nachfolgend werden die Probleme der Ressource Leder im Hinblick auf deren Verwendung als Überzug, insbesondere für Lenkräder in Kraftfahrzeugen, kurz beleuchtet. Der histologische Aufbau einer Rinderhaut verhindert eine einheitliche und reversible Dehnung des Leders. Das durchschnittliche Dehnverhalten (längs/quer) einer Lederhaut variiert von 4 - 25%. Ohne verschnitteinschränkende Parameter, wie Naturmerkmale, in Betracht zu ziehen, hat nur etwa die Hälfte der Lederhaut ein gleichbleibendes Dehnverhalten, welches auch den Ansprüchen bestimmter Spezifikationen entspricht. Je nach Ledertyp muss ein Anteil von 35 - 60 % der hochwertigen Lederhaut entsorgt werden, da er den Anforderungen nicht entspricht.

Umlederte Lenkräder müssen meist unter Einsatz von Temperatur in Form gebracht, das heißt geglättet werden.

Die physikalischen Anforderungen bestimmter Spezifikationen können nur im Kernbereich der Lederhaut erreicht werden.

Allgemein ist selbst unter Betrachtung der idealen Dehnung der Lederhaut von 8 - 18 % eine präzise Positionierung der umlederten Gegenstände zueinander nicht gegeben. In der Produktion von Interieur-Applikationen kommt es zwangsläufig zu einer Vermischung der Lederzuschnitte aus unterschiedlichen Entnahmebereichen, wobei davon auszugehen ist, dass die Ausbringung aus der gesamten Lederhaut erfolgt.

Im Verbund der Applikation bzw. der Umlederung treffen somit Gegenstände mit extrem unterschiedlichen Dehnungen aufeinander. Die Passgenauigkeit der Lederzuschnitte im vernähten Verbund kann per se nur Zufall sein - den Toleranzen der Lederdehnung kann in der Erstellung der Kontur nur annähernd begegnet werden. Falten im Verbau sind bei Übergängen von konvexen zu konkaven Bereichen eine weitere Auswirkung dieser Situation.

Aufgrund von unterschiedlichen Produktionstechniken und unterschiedlichen Rohhautprovenienzen ist die Erstellung von Unisono-Schablonen für alle Lederarten und Lieferanten nicht möglich. Zuschnittschablonen werden in der Konstruktion basierend auf einer Masterlederhaut erstellt. Aufwendig wird dabei versucht, die unterschiedlichen Dehnungen der Lederhaut für die Serienlieferung zu berücksichtigen. Unterschieden von Lederhaut zu Lederhaut bzw. anderen Einflüssen kann hier keine Rechnung getragen werden.

Bis zur Serientauglichkeit von Zuschnitten müssen deshalb zahlreiche Schleifen zur Optimierung des Zuschnittes gefahren werden. Natürliches Leder ist nach einer Dehnung nicht in der Lage, seine ursprüngliche Form wieder einzunehmen. Daher kommt beanspruchtes Leder mit Fortschritt der Beanspruchung immer mehr aus der Form. Folge ist die fortschreitende Überdehnung. Mit der Intensität der Beanspruchung schreitet dieser Prozess schneller voran und kann bis zu Rissen und Brüchen führen.

Aufgrund der unterschiedlichen Dehnung von Leder in Längs- und Querrichtung ist es notwendig, einem Stanzplan zu folgen und die Zuschnitte gerichtet aus der Lederhaut zu entnehmen (z.B. Stanzrichtung: Bauch-Bauch).

Die unterschiedliche Dehnung ist auch der Grund dafür, dass jeder Gegenstand trotz bester Konstruktion und Konturerstellung eine große Herausforderung an den Mitarbeiter der Serienproduktion darstellt. Der Mitarbeiter erarbeitet sich Fertigkeiten, mit den unterschiedlichen Gegebenheiten umzugehen, ist dabei aber nur bedingt produktiv.

Die oben beschriebenen Ungenauigkeiten führen dazu, dass bei der derzeitigen Herstellung von Lenkradüberzügen die Handarbeit überwiegt. Auf die bestehenden Lenkradrohlinge wird der zugeschnittene und entsprechend endlos vernähte Schlauchteil manuell über die Lenkradkontur gezogen und entsprechend der Anordnung der Nähte und Speichen positioniert.

Die Positionierung des Schlauchstreifens zur exakten Umschlingung des Griffringprofils und die Positionierung in Relation zu den Speichenanschlüssen am Rohling erfordert ein hohes Maß an Erfahrung und Zeit.

Aufgabe der Erfindung ist es, ein Verfahren und eine Vorrichtung zu schaffen, um ein Lenkrad mit einem Überzug zu versehen, welches die oben genannten Nachteile überwindet und es ermöglicht, den Überzug effektiv, passgenau und formschön auf den Lenkradgrundkörper aufzubringen. Es soll insbesondere eine genaue und wiederholbare Positionierung des Überzugs auf dem Lenkrad ermöglicht werden.

Diese Aufgabe wird erfindungsgemäß durch eine Vorrichtung zum automatisierten Aufziehen eines endlos vernähten Bezugsstreifens, vorzugsweise eines Lederstreifens, auf ein Bauteil, vorzugsweise ein Lenkrad, umfassend eine Schiebevorrichtung mit einer Lenkradaufnahme zur Aufnahme des Lenkrads sowie eine ortsfeste Basisplatte gelöst.

Erfindungsgemäß ist vorgesehen, dass die Basisplatte einen Konturausschnitt zum Durchdrücken des Lenkrads aufweist, an dem Fixlamellen und federnde Führungslamellen vorgesehen sind, wobei an der Basisplatte Haltezylinder mit Positionier- und Haltevorrichtungen, vorzugsweise Haltemagneten, zur Halterung des Bezugsstreifens an den Fixlamellen vorgesehen sind.

Durch die erfindungsgemäß vorgesehenen Haltemagneten können die Fixlamellen nach außen gedrückt werden und somit eine Fixierung des Bezugsstreifens zwischen den Fixlamellen und den Haltemagneten erzielen, während die Führungslamellen den Bezugsstreifen locker in Form halten, um das Lenkrad zentriert in den Bezugsstreifen drücken zu können. Zu diesem Zweck können die Haltemagneten auf Schenkeln angeordnet sein, die im Wesentlichen parallel zu den Fixlamellen oder den Führungslamellen angeordnet sind.

Erfindungsgemäß kann vorgesehen sein, dass verkürzte federnde Führungslamellen vorgesehen sind, um einen Klemmbereich für ein Klemmen des Bezugsstreifens am Lenkrad freizustellen. Dadurch wird erreicht, dass im Bereich der verkürzten Führungslamellen der Bezugsstreifen direkt auf das Lenkrad gedrückt werden kann, während im Bereich der anderen Lamellen das Lenkrad nicht in Kontakt mit dem Bezugsstreifen ist.

Erfindungsgemäß kann vorgesehen sein, dass die Fixlamellen und/oder die Führungslamellen aus einem magnetisierbaren Material bestehen oder dieses umfassen.

Erfindungsgemäß können sowohl die Fixlamellen, als auch die Führungslamellen eine gewisse Elastizität aufweisen, um ein Spannen des Bezugsstreifens und das Durchdrücken des Lenkrades zu ermöglichen. Vorzugsweise weisen jedoch die Fixlamellen eine geringere Elastizität auf als die Führungslamellen, sodass die Fixlamellen steifer sind als die Führungslamellen.

Erfindungsgemäß kann vorgesehen sein, dass außerhalb der federnden Führungslamellen eine bewegliche Trägerplatte mit Haltevorrichtungen, insbesondere Klemmzylindern, zur Fixierung des Bezugsstreifens am Lenkrad vorgesehen ist. Diese Klemmzylinder können insbesondere ausfahrende Stempel umfassen, um den Bezugsstreifen punktuell am Lenkrad zu fixieren.

Erfindungsgemäß kann vorgesehen sein, dass die Fixlamellen an ihrer Innenseite eine halbrunde Führungsnase unterhalb eines Aufnahmeschlitzes für eine Stoßnaht des Bezugsstreifens aufweisen, welche vorzugsweise zum Eingriff in eine Nut des Lenkrads ausgeführt ist, um das Lenkrad korrekt in Relation zum Stoß des Bezugsstreifens zu zentrieren.

Dadurch wird erreicht, dass der Bezugsstreifen in einer eindeutigen mittigen Position am Lenkrad positioniert wird, bevor er durch Aktivieren der Haltemagneten an den Fixlamellen fixiert wird.

Erfindungsgemäß kann vorgesehen sein, dass die Schiebevorrichtung um eine Achse schwenkbar gelagert ist, sodass das Lenkrad winkelig in den Konturausschnitt der Basisplatte einführbar ist. Insbesondere kann vorgesehen sein, dass die Schiebevorrichtung schwenkbar und entlang einer vertikalen und horizontalen Achse verschiebbar ist. Zu diesem Zweck kann die Schiebevorrichtung auf einer Halterung angeordnet sein, die in horizontaler und vertikaler Richtung verschiebbar ist.

Dadurch kann das Lenkrad zunächst in eine winkelige Position geschwenkt werden, und danach in vertikaler Richtung durch den Konturausschnitt gedrückt werden, bis eine Mittelstellung erreicht wird. Der Bezugsstreifen wird dabei zunächst nur an einem Teil seines Umfangs gedehnt.

In Folge wird das Lenkrad durch die schwenkbare Schiebevorrichtung gerade gestellt und gleichzeitig in horizontaler Richtung verschoben, sodass das Lenkrad an der gegenüberliegenden Seite durch den Konturausschnitt gedrückt wird und der Bezugsstreifen am anderen Teil seines Umfangs gedehnt wird.

Die Gesamtbelastung des Bezugsstreifens beim Durchdrücken des Lenkrades reduziert sich durch diese Vorgangsweise, und es wird gewährleistet, dass allenfalls vorhandene Nähte des Bezugsstreifens beim Aufziehen nicht überdehnt oder beschädigt werden.

Die Erfindung bezieht sich weiters auf ein Verfahren zum Aufziehen eines endlos vernähten Bezugsstreifens, vorzugsweise eines Lederstreifens, auf ein Bauteil, vorzugsweise ein Lenkrad, welches zumindest folgende Schritte umfasst:
Zunächst wird der Bezugsstreifen an mindestens einer Fixlamelle einer Basisplatte durch Haltezylinder mit Positionier- und Haltevorrichtungen, vorzugsweise Haltemagneten, fixiert.

Danach wird das Lenkrad an der Innenseite federnder Führungslamellen durch einen Konturausschnitt der Basisplatte gedrückt. Diese Verschiebung des Lenkrads kann insbesondere in vertikaler oder horizontaler Richtung erfolgen, wobei das Lenkrad selbst relativ zu dieser Verschiebungsrichtung in einem beliebigen Winkel angeordnet sein kann. Das Lenkrad wird durch den Konturausschnitt der Basisplatte gedrückt bis eine definierte Mittenstellung relativ zum Bezugsstreifen erreicht wird.

Danach wird der Bezugsstreifen am Lenkrad durch Haltevorrichtungen, insbesondere Klemmzylinder, die an einer außerhalb der federnden Führungslamellen angeordneten, bewegliche Trägerplatte angeordnet sind, fixiert und die Positionier- und Haltevorrichtungen, vorzugsweise Haltemagneten, werden gelöst.

Danach wird die bewegliche Trägerplatte mit den Haltevorrichtungen, insbesondere Klemmzylindern, synchron mit dem Lenkrad über die gesamte Länge der Führungslamellen entlang der Verschiebungsrichtung geschoben, sodass der Bezugsstreifen von den Führungslamellen auf das Lenkrad abgezogen wird.

Erfindungsgemäß kann vorgesehen sein, dass beim Abziehen des Bezugsstreifens eine Aufdehnung des Bezugsstreifens durch das Lenkrad über die federnden Führungslamellen erfolgt.

Erfindungsgemäß kann vorgesehen sein, dass der Bezugsstreifen nach dem Aufziehen mittels Klemmelemente, beispielsweise Clips, in der Position fixiert wird.

Erfindungsgemäß kann vorgesehen sein, dass der Bezugsstreifen an seiner Innenseite mit einem wärmeaktivierbaren Kleber beschichtet ist, der punktuell während des Haltevorgangs mittels Punkterwärmung aktiviert wird und somit der Bezugsstreifen am Lenkrad fixiert wird.

Erfindungsgemäß kann vorgesehen sein, dass das Lenkrad zunächst durch eine schwenkbare Schiebevorrichtung in einen Winkel zur Verschiebeachse der Schiebevorrichtung gebracht wird, und danach entlang dieser Verschiebeachse durch den Konturausschnitt der Basisplatte gedrückt wird, sodass das Lenkrad zunächst nur an einem Teil seines äußeren Umfangs mit den federnden Führungslamellen in Kontakt tritt, und die Randzonen des Bezugsstreifens beim Durchdrücken nur partiell belastet werden.

Erfindungsgemäß kann vorgesehen sein, dass das Lenkrad durch die schwenkbare Schiebevorrichtung nach dem winkeligen Einbringen in die Führungslamellen zurück in eine gerade, insbesondere vertikale oder horizontale, Stellung gebracht wird. Vorzugsweise kann die Schiebevorrichtung während des Geradestellens vertikal oder horizontal nachgeführt werden, sodass sichergestellt wird, dass sich das Lenkrad innerhalb der federnden Führungslamellen zentriert. Zu diesem Zweck kann die Schiebevorrichtung mit einer horizontal und/oder vertikal beweglichen Halterung verschoben werden.

Durch erfindungsgemäße Vorrichtung und das erfindungsgemäße Verfahren ist es möglich, wesentlich geringere Toleranzanforderungen an die Herstellung des endlosen Bezugsstreifens zu stellen.

Im Folgenden wird die Erfindung an Hand exemplarischer und nicht ausschließlicher Ausführungsbeispiele näher erläutert.

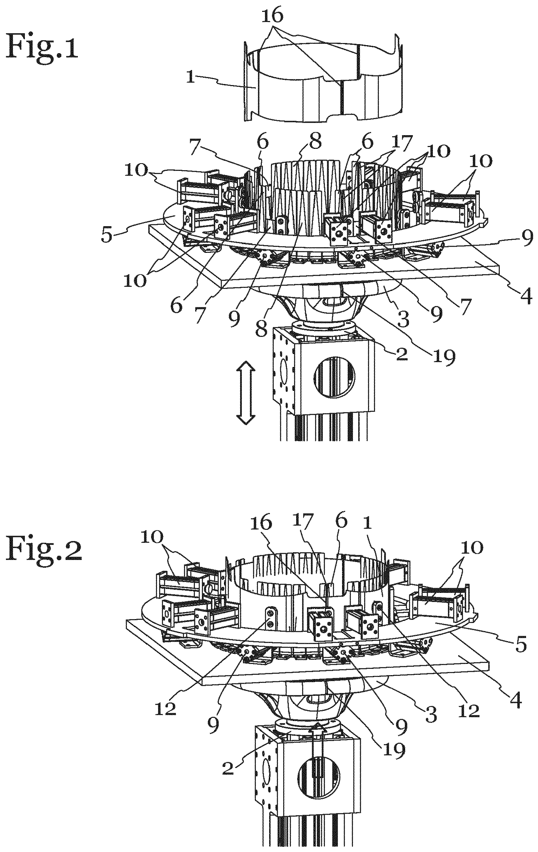

Fig. 1 zeigt eine schematische Ansicht einer Ausführungsform einer erfindungsgemäßen Vorrichtung zum Überziehen eines endlosen Bezugsstreifens 1 auf einen Lenkradrohling oder ein Lenkrad 3. Die Vorrichtung umfasst eine Schiebevorrichtung 2, die entweder vertikal oder auch horizontal angeordnet sein kann. Am Kopf dieser Schiebevorrichtung 2 befindet sich eine Lenkradaufnahme, auf der das Lenkrad 3 zentriert befestigt ist. Durch die Schiebevorrichtung 2 kann das Lenkrad 3 entlang einer durch einen Pfeil schematisch angedeuteten Verschieberichtung verschoben werden.

Der Bezugsstreifen 1 weist an seinem äußeren Umfang drei Stoßnähte 16 auf.

In einem definierten Abstand zur Schiebevorrichtung 2 befindet sich eine ortsfeste Basisplatte 4 mit einem Konturausschnitt zur Durchführung des Lenkrades 3. Der Konturausschnitt ist in der Regel an die Außenform des zu beziehenden Lenkrades 3 angepasst und beispielsweise kreisförmig. Am äußeren Umfang des Konturausschnitts sind Lamellen 6, 7, 8 angeordnet. Bei den Lamellen handelt es sich einerseits um üblicherweise ein bis drei Fixlamellen 6 mit einer Aufnahme- und Führungsnut, insbesondere einem Führungsschlitz 17, zur Aufnahme einer Stoßnaht 16 des Bezugsstreifens 1. Die Fixlamellen 6 verfügen weiters über eine (nicht dargestellte) halbrunde Führungsnase zum Eingriff in eine Nut 19 am Lenkrad 3. Diese Fixlamellen 6 dienen somit dazu, die korrekte Positionierung des Bezugsstreifens 1 sicherzustellen.

Jeweils links und rechts von den Fixlamellen 6 sind verkürzte federnde Führungslamellen 7 angeordnet. Diese verkürzten Führungslamellen 7 stellen einen Klemmbereich für ein Klemmen des Bezugsstreifens 1 am Umfang des Lenkrads 3 frei.

Schließlich sind zahlreiche weitere federnde Führungslamellen 8 vorgesehen, deren Länge im Wesentlichen der Länge der Fixlamellen 6 entspricht, und die zur Führung und lockeren Halterung des Bezugsstreifens 1 dienen.

Auf der Basisplatte 4 sind Haltezylinder mit Positionier- und Haltevorrichtungen, beispielsweise elektrisch aktivierbare Haltemagneten 9 angeordnet.

Die elektrischen Haltemagneten 9 sind vorzugsweise auf Schenkeln 12 angeordnet oder durch diese gebildet, die im Wesentlichen parallel zu den Lamellen, insbesondere parallel zu den Fixlamellen 6 verlaufen, sodass beim Aktivieren der Haltemagneten 9 die Fixlamellen 6 angezogen werden und den Bezugsstreifen 1 zwischen den Fixlamellen 6 und den Haltemagneten 9 einklemmen. Es sind aber auch einzelne Haltemagneten 9 parallel zu regulären Führungslamellen 8 vorgesehen, sodass der Bezugsstreifen 1 zwischen den Führungslamellen 8 und den Haltemagneten 9 eingeklemmt wird. Zumindest diese einzelnen Führungslamellen weisen magnetisierbares Material auf.

Außerhalb der federnden Führungslamellen 8 ist eine vorzugsweise ringförmige, bewegliche Trägerplatte 5 vorgesehen. Auf der Trägerplatte 5 sind Klemmzylinder 10 angeordnet. Die Klemmzylinder 10 sind auf der Höhe des größten Durchmessers, d. h. auf der theoretischen Mitte des zu vernähenden endlosen Bezugsstreifens 1 angeordnet. Die Klemmzylinder umfassen einen ausfahrbaren Stempel 11, der dazu eingerichtet ist, den Bezugsstreifen 1 am äußeren Umfang des Lenkrads 3 festzuklemmen.

Die Klemmzylinder 10 sind entlang der Trägerplatte 5 an jenen Stellen angeordnet, an denen auf der Basisplatte 4 die verkürzten Führungslamellen 7 vorgesehen sind. Die verkürzten Führungslamellen 7 sind wiederum nur so lang, dass sie den Bereich der Höhe des größten Durchmessers, d. h. den Bereich der theoretischen Mitte des zu vernähenden endlosen Bezugsstreifens 1, freistellen. Dadurch wird erreicht, dass die Stempel 11 der Klemmzylinder 10 direkt den Bezugsstreifen 1 auf das Lenkrad 3 pressen können, ohne dass eine Führungslamelle dazwischen zu liegen kommt.

Die Trägerplatte 5 ist relativ zur Basisplatte 4 entlang der vertikalen oder horizontalen Achse der Schiebevorrichtung 2 verschiebbar, sodass nach dem Aktivieren der Klemmzylinder 10 das Lenkrad 3 gemeinsam mit der Trägerplatte 5 und dem geklemmten Bezugsstreifen 1 verschoben werden kann.

Fig. 2 - 5 zeigen die Arbeitsschritte beim Aufbringen des Bezugsstreifens 1 auf das Lenkrad 3, welches bereits in der Lenkradaufnahme der Schiebevorrichtung 2 fixiert ist.

Fig. 2 zeigt zunächst die Positionierung des Bezugsstreifens 1 auf den Fixlamellen 6, die derart durchgeführt wird, dass die exakte Position der Überstände für den Speichenanschluss in Bezug auf das Lenkrad 3 sichergestellt ist. Vorzugsweise verwendet man dabei unter anderem eine Stoßnaht 16 des Bezugsstreifens 1, die in eine Führungsnut 17 der Fixlamellen 6 eingesetzt wird. Vorzugsweise befindet sich am Lenkradrohling 3 exakt in diesem Bereich eine ringförmige Aussparung oder Nut 19, die gegebenenfalls auch einen Nahtüberstand an der Bezugsstoßstelle aufnehmen kann.

Die federnden Führungslamellen 8 sind nun äußerst lose von dem Bezugsstreifen 1 umschlossen, verhindern aber ein Zusammenfallen des nur punktuell gehaltenen endlosen Bezugsstreifens 1.

Anschließend werden die Haltemagneten 9 aktiviert, wodurch der Bezugsstreifen 1 zumindest zwischen den Fixlamellen 6 und den Schenkeln der Haltemagneten 9 eingespannt und fixiert wird. Gegebenenfalls wird der Bezugsstreifen 1 auch zwischen einzelnen Führungslamellen 8 und den Schenkeln der Haltemagneten 9 fixiert, abhängig davon, wo und wie viele Haltemagneten 9 auf der Trägerplatte 5 angeordnet sind.

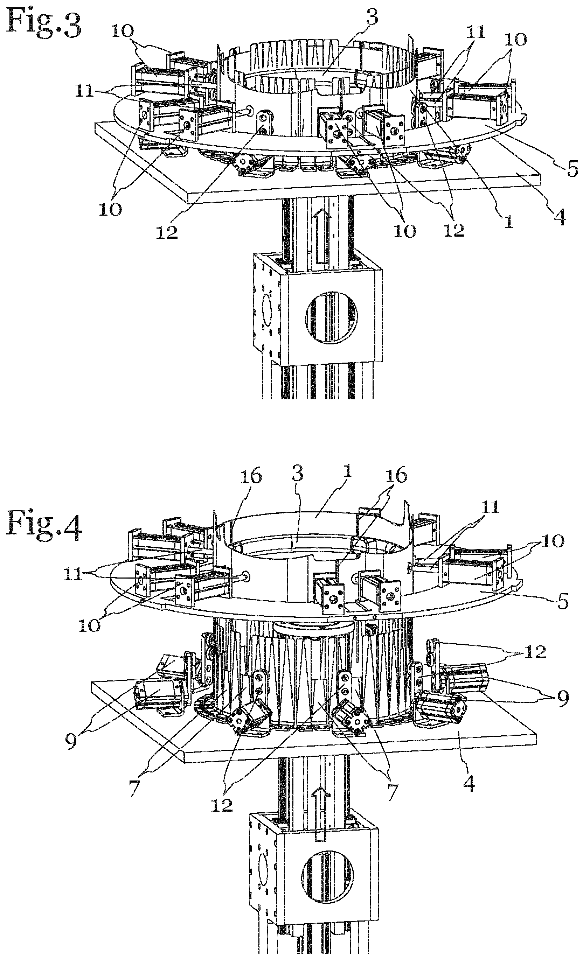

Fig. 3 zeigt den nächsten Produktionsschritt. Das Lenkrad 3 wird durch die Schiebevorrichtung 2 nach oben durch den Konturausschnitt der Basisplatte 4 geschoben und an der Innenseite der federnden Führungslamellen 8 bis zu einer definierten Mittelposition durchgedrückt, wobei das Lenkrad selbst die Kontur des Bezugsstreifens 1 vorgibt und nur die geringstmögliche Dehnung des Bezugsstreifens 1 durch die federnden Führungslamellen 8 vorgenommen wird. Während dieses ersten Taktes kommt es zu keiner direkten Berührung des Lenkrads 3 mit dem Bezugsstreifen 1. Die Haltemagneten 9 stellen sicher, dass sich der Bezugsstreifen 1 während des Durchdrückens des Lenkrads 3 nicht verschiebt.

Wenn der exakte Übernahmepunkt erreicht ist, werden die Klemmzylinder 10 aktiviert. Die Klemmzylinder 10 verfügen dazu über Stempel 11, die ausfahren und den Bezugsstreifen 1 radial an der Außenkontur des Lenkrades 3 festklemmen. Danach werden die Haltemagneten 9 gelöst, sodass der Bezugsstreifen 1 nur mehr am Lenkrad 3 festgeklemmt ist.

Fig. 4 zeigt den nächsten Prozessschritt. Bei diesem zweiten Takt wird die bewegliche Trägerplatte 5 mit den Klemmzylindern 10 synchron mit dem Lenkrad 3 nach oben bewegt und über die gesamte Länge der federnden Führungslamellen 8 geschoben. Bei diesem Vorgang wird der Bezugsstreifen 1 durch die Stempel 11 exakt am Umfang des Lenkrades 3 festgehalten und von den federnden Führungslamellen 8 abgezogen.

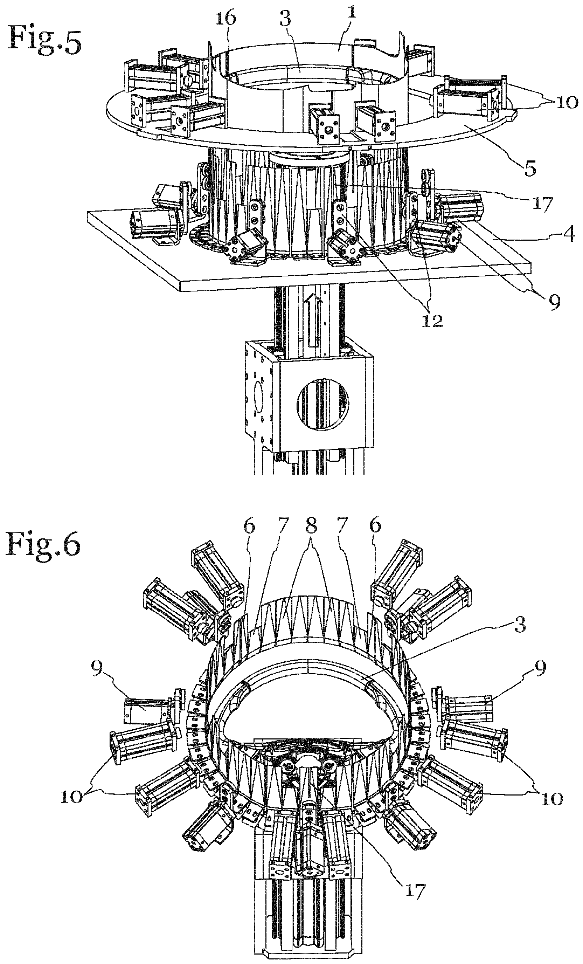

Fig. 5 zeigt den nächsten Prozessschritt. Der Bezugsstreifen 1 wird auf dem Lenkrad 3 fixiert und die Stempel 11 werden eingefahren, sodass das Lenkrad 3 zur weiteren Verarbeitung aus der Vorrichtung genommen werden kann.

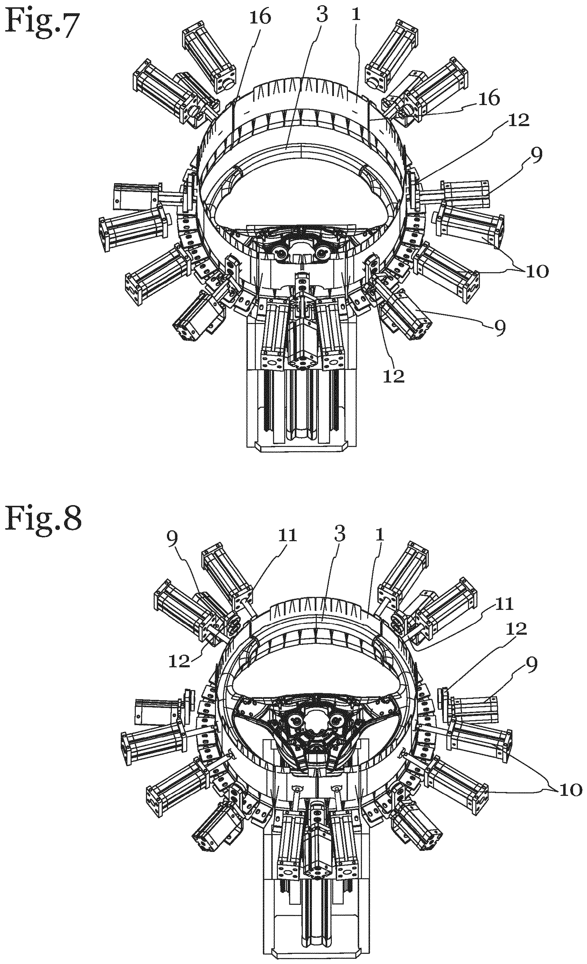

Die Figuren 6 - 11 zeigen weitere schematische Darstellungen einer Ausführungsform der erfindungsgemäßen Vorrichtung in den verschiedenen Prozessschritten, wobei eine andere Sichtweise gewählt wurde und die Basisplatte 4 sowie die Trägerplatte 5 nicht dargestellt sind, um die Anordnung der einzelnen Lamellen 6, 7, 8 besser zu veranschaulichen. Es ist ersichtlich, dass die verkürzten Führungslamellen 7 stets dort angeordnet sind, wo Klemmzylinder 10 vorgesehen sind, um ein Ausfahren der Stempel 11 zu ermöglichen. Zwischen den verkürzten Führungslamellen sind Fixlamellen 6 vorgesehen, die durch Haltemagneten 9 mit Schenkeln 12 zum Klemmen des Bezugsstreifens 1 verwendet werden, wobei Stoßnähte 16 des Bezugsstreifens 1 in Führungsschlitzen 17 der Fixlamellen 6 aufgenommen werden. Weitere magnetisierbare Führungslamellen mit entsprechenden Haltemagneten 9 sind auch an anderen Stellen des Umfangs vorgesehen, sodass eine sichere Halterung des Bezugsstreifens 1 gewährleistet ist.

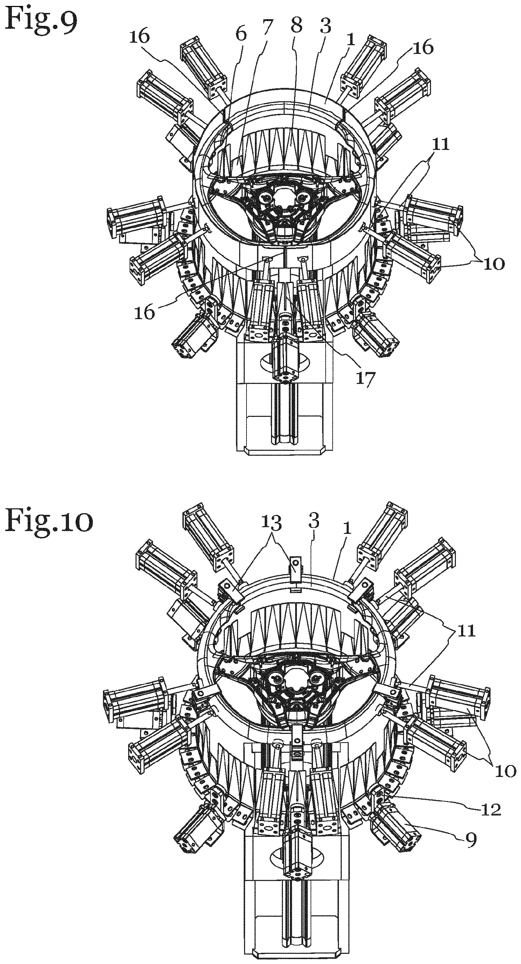

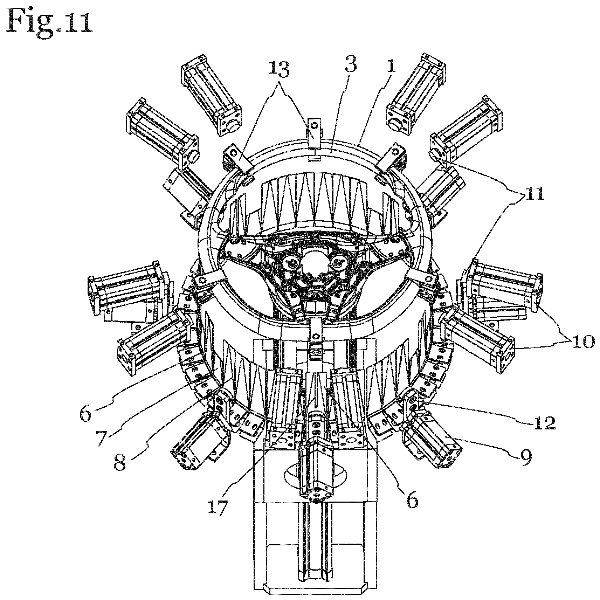

Fig. 10 und 11 zeigen, dass der Bezugsstreifen 1 nach dem korrekten Aufziehen auf das Lenkrad 3 mittels spezieller Klemmelemente 13, beispielsweise Clips, am Lenkrad 3 punktuell fixiert wird, um eine weitere Verarbeitung zu vereinfachen.

Zu diesem Zweck ist in diesem Ausführungsbeispiel insbesondere vorgesehen, dass der Bezugsstreifen 1 an seiner Innenseite mit einem wärmeaktivierbaren Kleber beschichtet ist, der punktuell während des Haltevorgangs aktiviert wird und somit den Bezugsstreifen am Lenkrad 3 fixiert.

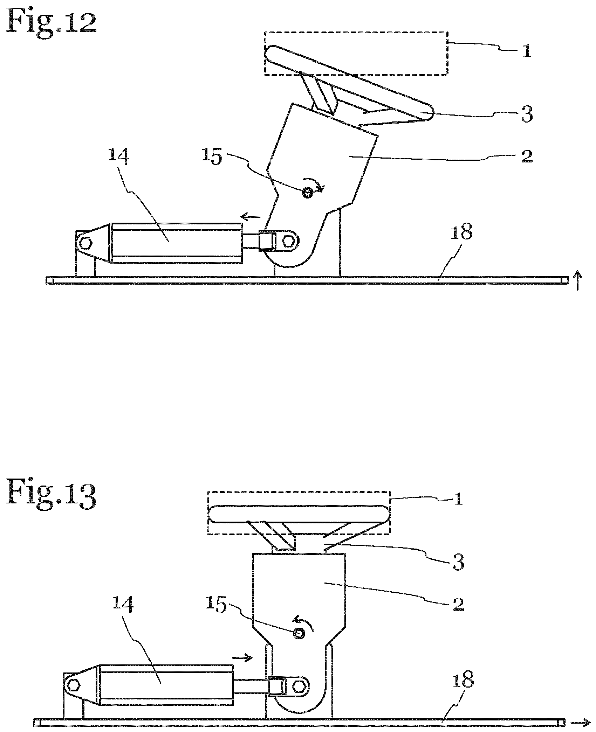

Fig. 12 und Fig. 13 zeigen eine weitere Ausführungsform der erfindungsgemäßen Vorrichtung. In dieser Ausführungsform verschiebt die Schiebevorrichtung 2 das Lenkrad 3 nicht vertikal in den Konturausschnitt der Basisplatte 4, sondern winkelig, sodass ein Teilumfang des Lenkrads 3 zuerst mit den Lamellen 6, 7, 8 in Kontakt kommt. Dadurch wird der schematisch angedeutete Bezugsstreifen 1 zunächst nur an einem Teil seines Umfangs gedehnt.

Zu diesem Zweck ist die Schiebevorrichtung 2 auf einer Halterung 18 angeordnet und durch einen Schiebezylinder 14 um eine Achse 15 um einen bestimmten Winkel schwenkbar, sodass die Schiebevorrichtung 2 das Lenkrad 3 sowohl starr in einem Winkel von 90°, als auch winkelig in den Konturausschnitt der Basisplatte 4 einführen kann. Bei dem Winkel kann es sich um einen beliebigen Winkel im Bereich von 0° bis 45°, vorzugsweise 15° bis 30°, zur Verschieberichtung handeln. Die Halterung 18 ist sowohl in vertikaler Richtung, als auch in horizontaler Richtung verschiebbar.

Nach vertikaler Einführung eines Teils des Umfangs des schräg gestellten Lenkrads 3 in die Lamellen 6, 7, 8 bis zu einer definierten Mittelstellung wird die Schiebevorrichtung 2 zurück in die Vertikale gedreht und gleichzeitig die Halterung 18 horizontal verschoben, sodass der restliche Umfang des Lenkrads 3 in die Lamellen 6, 7, 8 geschoben wird und gleichzeitig das Lenkrad 3 zentriert wird. Der Bezugsstreifen 1 erfährt während dieser Bewegung seine restliche Dehnung.

Dieses Verfahren ist insbesondere bei jenen Bezugsstreifen vorteilhaft, die entlang der beiden zu vernähenden Kanten der Bezugsstreifen eine vorgefertigte Umfangsnaht aufweisen, deren Nahtgarn nach dem Beziehen miteinander vernäht wird. Bei diesen Bezugsstreifen besteht die Gefahr, dass beim Bezugsvorgang die Umfangsnaht des Bezugsstreifens 1 zu stark überdehnt wird, und es zu einer Beschädigung der Umfangsnaht kommt.

Das schräg gestellte Lenkrad 3 wird zuerst soweit in die Lamellen eingeführt, bis der vordere Ringabschnitt des Lenkrads 3 die Übergabeposition erreicht hat. Somit liegt der größte Umfang des Lenkrades bereits in der Mitte des Bezugsstreifens und die Umfangskanten des Bezugsstreifens sind wieder entlastet.

Durch das darauf folgende Einschwenken und die horizontale Verschiebung wird das Lenkrad 3 wieder in eine 90°-Position zur Schieberichtung gebracht, ohne die Umfangskanten zu überlasten. Während dieses Vorganges werden die Randbereiche des Bezugsstreifens weniger belastet, da sie im Bereich des bereits in Mittelposition befindlichen Teils des Rohlings zum Zentrum des Lenkrades hin nachgeben können. Es kommt nur partiell, nämlich nur in jenen Bereichen, die nicht durch Lamellen abgedeckt sind, zu einer Berührung des Lenkrades 3, wobei die Reibung nicht ausreicht, dass der Bezugsstreifen 1 vom Lenkrad 3 mitgenommen wird. Danach kann der Bezugsstreifen 1 am äußeren Umfang des Lenkrades 3 wieder durch die Haltemagneten 9 geklemmt und analog der bereits beschriebenen Vorgangsweise weiter bearbeitet werden.

In nicht dargestellten Ausführungsbeispielen der Erfindung ist die Vorrichtung um 90° gedreht, sodass die Verschieberichtung des Lenkrades 3 nicht vertikal, sondern horizontal verläuft.

### Bezugszeichenliste

- 1: Bezugsstreifen
- 2: Schiebevorrichtung
- 3: Lenkrad
- 4: Basisplatte
- 5: Trägerplatte
- 6: Fixlamelle
- 7: Verkürzte Führungslamelle
- 8: Führungslamelle
- 9: Haltemagnet
- 10: Klemmzylinder
- 11: Stempel
- 12: Schenkel
- 13: Klemmelement
- 14: Schiebezylinder
- 15: Achse
- 16: Stoßnaht
- 17: Aufnahmeschlitz
- 18: Halterung
- 19: Nut

## Patentansprüche

1. Vorrichtung zum automatisierten Aufziehen eines endlos vernähten Bezugsstreifens (1), vorzugsweise eines Lederstreifens, auf ein Bauteil, vorzugsweise ein Lenkrad (3), umfassend eine Schiebevorrichtung (2) mit einer Lenkradaufnahme zur Aufnahme des Lenkrads (3) sowie eine ortsfeste Basisplatte (4), **dadurch gekennzeichnet, dass** die Basisplatte (4) einen Konturausschnitt zum Durchdrücken des Lenkrads (3) aufweist, an dem Fixlamellen (6) und federnde Führungslamellen (7, 8) vorgesehen sind, wobei an der Basisplatte (4) Haltezylinder mit Positionier- und Haltevorrichtungen, vorzugsweise Haltemagneten (9), zur Halterung des Bezugsstreifens (1) an den Fixlamellen (6) vorgesehen sind.

2. Vorrichtung nach Anspruch 1, **dadurch gekennzeichnet, dass** verkürzte federnde Führungslamellen (7) vorgesehen sind, um einen Klemmbereich für ein Klemmen des Bezugsstreifens (1) am Lenkrad (3) freizustellen.

3. Vorrichtung nach Anspruch 1 oder 2, **dadurch gekennzeichnet, dass** außerhalb der federnden Führungslamellen (7, 8) eine bewegliche Trägerplatte (5) mit Haltevorrichtungen, insbesondere Klemmzylindern (10), zur Fixierung des Bezugsstreifens (1) am Lenkrad (3) vorgesehen ist.

4. Vorrichtung nach einem der Ansprüche 1 bis 3, **dadurch gekennzeichnet, dass** die Fixlamellen (6) an ihrer Innenseite eine halbrunde Führungsnase unterhalb eines Aufnahmeschlitzes (17) für eine Stoßnaht (16) des Bezugsstreifens (1) aufweisen, welche vorzugsweise zum Eingriff in eine Nut (19) des Lenkrads (3) ausgeführt ist, um das Lenkrad (3) korrekt in Relation zur Stoßnaht (16) des Bezugsstreifens (1) zu zentrieren.

5. Vorrichtung nach einem der Ansprüche 1 bis 4, **dadurch gekennzeichnet, dass** die Fixlamellen (6) eine geringere Elastizität aufweisen als die Führungslamellen (7, 8).

6. Vorrichtung nach einem der Ansprüche 1 bis 5, **dadurch gekennzeichnet, dass** die Fixlamellen (6) aus einem magnetisierbaren Material bestehen oder dieses umfassen.

7. Vorrichtung nach einem der Ansprüche 1 bis 6, **dadurch gekennzeichnet, dass** die Schiebevorrichtung (2) um eine Achse (15) schwenkbar und vorzugsweise auf einer Halterung (18) in horizontaler und/oder vertikaler Richtung verschiebbar gelagert ist, sodass das Lenkrad (3) winkelig zur Verschiebeachse der Schiebevorrichtung (2) in den Konturausschnitt der Basisplatte (4) einführbar und rückschwenkbar sowie in horizontaler und vertikaler Richtung verfahrbar ist.

8. Verfahren zum Aufziehen eines endlos vernähten Bezugsstreifens (1), vorzugsweise eines Lederstreifens, auf ein Bauteil, vorzugsweise ein Lenkrad (3), **dadurch gekennzeichnet, dass**
a. der Bezugsstreifen (1) an mindestens einer Fixlamelle (6) einer Basisplatte (4) durch Haltezylinder mit Positionier- und Haltevorrichtungen, vorzugsweise Haltemagneten (9), fixiert wird,
b. das Lenkrad (3) an der Innenseite federnder Führungslamellen (7, 8) durch einen Konturausschnitt der Basisplatte (4) gedrückt wird,
c. der Bezugsstreifen (1) am Lenkrad (3) durch Haltevorrichtungen, insbesondere Klemmzylinder (10), die an einer außerhalb der federnden Führungslamellen (7, 8) angeordneten, beweglichen Trägerplatte (5) angeordnet sind, fixiert wird und die Haltevorrichtungen, vorzugsweise Haltemagneten (9), gelöst werden, und
d. die bewegliche Trägerplatte (5) mit den Haltevorrichtungen, insbesondere Klemmzylindern (10), synchron mit dem Lenkrad (3) über die gesamte Länge der Führungslamellen (7, 8) geschoben wird, sodass der Bezugsstreifen (1) von den Führungslamellen (7, 8) auf das Lenkrad (3) abgezogen wird.

9. Verfahren nach Anspruch 8, **dadurch gekennzeichnet, dass** beim Abziehen des Bezugsstreifens (1) eine Aufdehnung des Bezugsstreifens (1) durch das Lenkrad (3) über die federnden Führungslamellen (7, 8) erfolgt.

10. Verfahren nach Anspruch 8 oder 9, **dadurch gekennzeichnet, dass** der Bezugsstreifen (1) nach dem Aufziehen mittels Klemmelemente (13), beispielsweise Clips, in der Position fixiert wird.

11. Verfahren nach einem der Ansprüche 8 bis 10, **dadurch gekennzeichnet, dass** der Bezugsstreifen (1) an seiner Innenseite mit einem wärmeaktivierbaren Kleber beschichtet ist, der punktuell während des Haltevorgangs mittels Punkterwärmung aktiviert wird und somit der Bezugsstreifen am Lenkrad (3) fixiert wird.

12. Verfahren nach einem der Ansprüche 8 bis 11, **dadurch gekennzeichnet, dass** das Lenkrad (3) zunächst durch eine schwenkbare Schiebevorrichtung (2) in einen Winkel zu einer Verschiebeachse der Schiebevorrichtung (2) gebracht wird, und danach entlang dieser Verschiebeachse durch den Konturausschnitt der Basisplatte (4) gedrückt wird, sodass das Lenkrad (3) zunächst nur an einem Teil seines äußeren Umfangs mit den federnden Führungslamellen (7, 8) in Kontakt tritt, und die Randzonen des Bezugsstreifens (1) beim Durchdrücken nur partiell belastet werden.

13. Verfahren nach Anspruch 12, **dadurch gekennzeichnet, dass** das Lenkrad (3) durch die schwenkbare Schiebevorrichtung (2) nach dem winkeligen Einbringen in die Führungslamellen (7, 8) zurück in eine gerade, insbesondere vertikale oder horizontale, Stellung gebracht wird und dabei gleichzeitig durch eine verschiebbare Halterung (18) in horizontaler und/oder vertikaler Richtung verfahren wird, sodass es sich innerhalb der federnden Führungslamellen (7, 8) zentriert.
